# EUROPEAN PATENT APPLICATION

(11) **EP 4 843 788 A1**
(43) Date of publication of application: **25.11.2026**
(21) Application number: 26160728.7
(22) Date of filing: 25.02.2026
(51) Int. Cl.: B42D 25/355, B42D 25/29, B42D 25/305, B42D 25/369, D21H 21/42, G06K 19/06, G06K 19/10, G07D 7/004, G07D 7/04

(54) **SECURITY THREAD AND MANUFACTURING METHOD FOR A SECURITY THREAD**

(30) Priority: 23.05.2025 IN 202511049701
(71) Applicant: Giesecke+Devrient Currency Technology GmbH, 81677 München (DE)
(72) Inventor: PFEIFFER, Matthias, 81677 München (DE); HEIGL, Michael, 81677 München (DE); HOLZMEISTER, Andreas, 83703 Gmund am Tegernsee (DE); SCHUETZMANN, Jürgen, 81677 München (DE)
(74) Representative: Patentanwälte Geyer, Fehners & Partner mbB

(57) **Abstract**

A security thread to be embedded into a document of value, such as a banknote, a check, a credit card or the like is described, wherein the security thread (2) extends along a longitudinal extension (8), the security thread (2) comprises a multitude of identical magnetic codes (4) which are spaced apart in the longitudinal extension (8) and which are each provided by a sequence of magnetic areas (6), wherein each sequence comprises at last two magnetic areas which are different regarding their magnetic material (6a, 6b, 6c), and wherein the magnetic areas (6) in each magnetic code (4) are arranged such that each magnetic code (4) is the same if read left-to-right and right-to-left, and wherein the magnetic areas (6) are arranged in each sequence symmetrically for flipping around the longitudinal extension (8).

## Description

The invention relates to a security thread to be embedded into a documents of value, such as a banknote, a check, a credit card or the like, wherein the security thread extends along a longitudinal extension and comprises a transverse extension running transversely thereto, the security thread comprises a multitude of magnetic codes which are spaced apart in the longitudinal extension and which are each provided by a sequence of magnetic areas, wherein each sequence comprises at last two magnetic areas which are different regarding their magnetic material and/or thickness of a magnetic material.

The invention further relates to a method for manufacturing a security thread to be embedded into a document of value, such as a banknote, a check, a credit card or the like, wherein the security thread is produced which extends along a longitudinal extension and comprises a transverse extension running transversely thereto, the security thread is provided with a multitude of magnetic codes which are spaced apart in the longitudinal extension and which are each provided by a sequence of magnetic areas, wherein each sequence comprises at last two magnetic areas which are different regarding their magnetic material and/or thickness of a magnetic material.

Documents of value are often equipped with such security threads containing magnetic codes for security purposes. Each magnetic code is formed by individual magnetic areas, also known as bits, which are arranged along the security thread. A specific sequence of magnetic and non-magnetic areas or bits constitutes each magnetic code.

Such security threads are pre-produced and embedded into the document of value or the precursor of this document of value. For such embedding, the pre-produced security thread is fed to a manufacturing machine which embeds the security thread into the document of value or the precursor.

Magnetic codes on security threads are often combined with visible elements or the like. This makes it easy to see whether a security thread is fed to the manufacturing machine in the right orientation and the right feeding extension. Because security threads are usually manufactured from webs comprising a structure for a multitude of security threads in parallel, it could otherwise happen that a security thread is inverted upside-down. It could even be fed to the security document or precursor producing machine in the wrong extension, i.e. with the back end first into the machine, because same production processes for security threads require to rewind the thread to change its extension on a coil. In both cases, the magnetic code would be wrong after being embedded. If the security thread comprises visible or legible elements, such wrong feeding or orientation can easily be detected. The situation is more difficult in cases of security threads which do not comprise legible or visible elements. Consequently, such security threads have the inherent risk of producing security documents or precursors which are rejected and cannot be used. Such security threads require elaborated detection of the magnetic code when feeding the security thread to the producing machine in in order to ensure correct, e.g. un-flipped orientation and incorrect extension of the security thread. This is particularly indispensable if the magnetic areas are concealed within the security thread, e.g. by concealing layers covering the magnetic areas as well as the non-magnetic areas, to make it impossible to detect the magnetic code in a visual inspection, e.g.in transparent view.

The invention is based on this problem and has the objective to minimize the risk to have rejects when producing documents of value or precursors of such documents comprising a security thread.

The invention is defined by the independent claims. The dependent claims relate to preferred embodiments which are of particular advantage.

The invention provides for a security thread to be embedded into a document of value, such as a bank note, a check, a credit card or the like, or to be embedded into a precursor of such document of value such as bank note paper, check blanks, credit card blanks or the like. The security thread extends along a longitudinal extension and comprises a transverse extension which runs transversely to the longitudinal extension. The security thread comprises a multitude of magnetic codes which are spaced apart in the longitudinal extension on the security thread. Each magnetic code is provided by a sequence of magnetic areas spaced by non-magnetic areas or comprises several different magnetical areas. Each sequence, thus, comprises at least two magnetic areas which are different regarding the magnetic material, i.e. are magnetically detectable and have different magnetic properties.

The magnetic areas in the sequence of each magnetic code are arranged such that each magnetic code is invariant for the reading direction along the longitudinal extension. That means that the magnetic code is the same if read in a first direction along the extension and read in a second direction along the extension, wherein the second direction is opposite to the first direction. The first direction can be left-to-right and the second direction right-to-left. In embodiments the sequence of magnetic areas of each magnetic code is symmetrical regarding inversion around a center axis of the magnetic code extension.

This feature makes the security thread insensible to the feeding direction in which the thread is fed to the manufacturing machine. No detection of the magnetic code is necessary anymore in the machine.

To achieve an additional insensitivity, the magnetic areas which are different regarding the magnetic material are arranged in each sequence symmetrical for inverting the security thread around the longitudinal extension. Consequently, it is of no matter whether the security thread is flipped around the longitudinal extension to the manufacturing machine. In these embodiments the magnetic codes are two-fold symmetric regarding inversions. In other words, the magnetic codes remain unchanged for all four possible permutations which can be made, namely flipping around the longitudinal axis (turning the thread backside-front) or changing the feeding extension, i.e. flipping around the center line of the magnetic code.

Of course, the security thread is of particular advantage if the security thread presents an unstructured faces in top view and/or an unstructured appearance in transmissiv view. This, e.g. is the case if a concealing layer covers the magnetic codes fully and also prevents visibility of the magnetic areas in a transparent view. In particular, it is of advantage to produce/provide a security thread which comprises a fully metallization on one or both faces of the security thread. In preferred embodiments, the security thread has no visually detectable structure. Such security threads have been particularly problematic regarding correct feeding to the manufacturing machine. Due to the inventive symmetries such optically unstructured security threads pose still no problem regarding orientation and feeding direction.

In embodiments, the magnetic code, which is invariant, is combined with a so called Cleartext, in which the metallization of the security thread is partly demetallized to show an additional code visible in top view. In this embodiment, the magnetic code is symmetrical and remains unchanged for the four possible permutations explained above, but the additional code can possibly change regarding the orientation of the security thread and the feeding direction. Preferably, the additional partly demetallized code can remain unchanged for all four possible permutations which can be made, namely flipping around the longitudinal axis (turning the thread backside-front) or changing the feeding extension, i.e. flipping around the center line of the magnetic code. Hence, a symmetrical magnetic code is combined with a symmetrical and direction independent Cleartext.

Depending on the width of the security thread, each magnetic code can be a 1D code or a 2D code. In a 1D code, each sequence of the magnetic areas which are different regarding the magnetic material are arranged only along the longitudinal extension, whereas in a 2D code, there are arranged along the longitudinal extension as well as along the transversal extension.

The magnetic areas can be provided by a multitude of means, but particularly preferred are prints of magnetic pigments, wherein the different materials are either different pure pigments or different blends of two or more different pigments.

The invention also comprises a document of value such as a bank note, a check, a credit card or the like or a precursor for such document of value such as a bank note paper, a check blank, a credit card blank or the like. The document of value of the precursor comprises a security thread as mentioned.

The invention also provides a method for manufacturing a security thread to be embedded into a document of value, such as a bank note, a check, a credit card or the like or to be embedded into a precursor of such document, wherein the security thread is produced to have the properties mentioned above.

Of course, all advantages and features explained herein in connection with a security thread also apply to the method of manufacturing this security thread and vice versa.

Preferably, the magnetic areas have a uniform magnetic structure.

It is understood that the features mentioned above and those to be explained below can be used not only in the combinations indicated, but also in other combinations or alone without leaving the scope of the present invention.

The invention is explained in more detail below with reference to embodiments and the accompanying drawings, which also disclose essential features of the invention. These embodiments are for illustrative purposes only and are not to be interpreted as limiting. For example, a description of an embodiment with a plurality of elements or components is not to be interpreted as meaning that all these elements or components are necessary for implementation. Rather, other embodiments may also contain alternative elements and components, fewer elements or components, or additional elements or components. Elements or components of different embodiments may be combined with each other unless otherwise specified. Modifications and variations described for one of the embodiments may also be applicable to other embodiments. To avoid repetition, identical or corresponding elements in different figures are designated with the same reference numerals and are not explained repeatedly. Shown in the figures:
Fig. 1a-1f security threads of a variety of first embodiments, viewed from above,
Fig. 2a-2g security threads of variety of second embodiments, viewed from above, and
Fig. 3 a magnetic code provided with a symmetrical and direction independent Cleartext, viewed from above.

Structures that are structurally or functionally corresponding are designated in the figures with the same reference numerals.

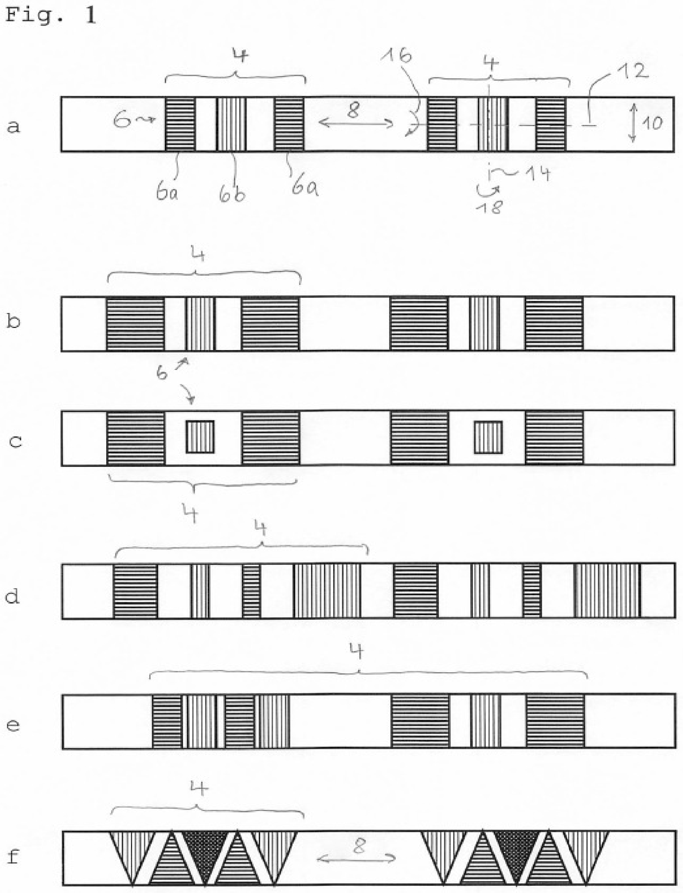

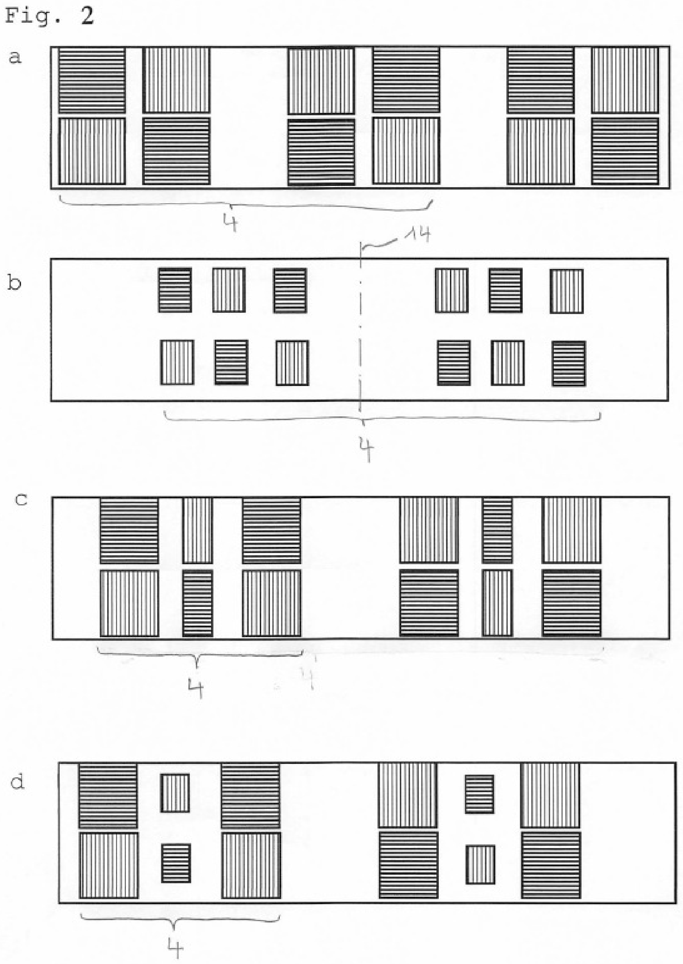

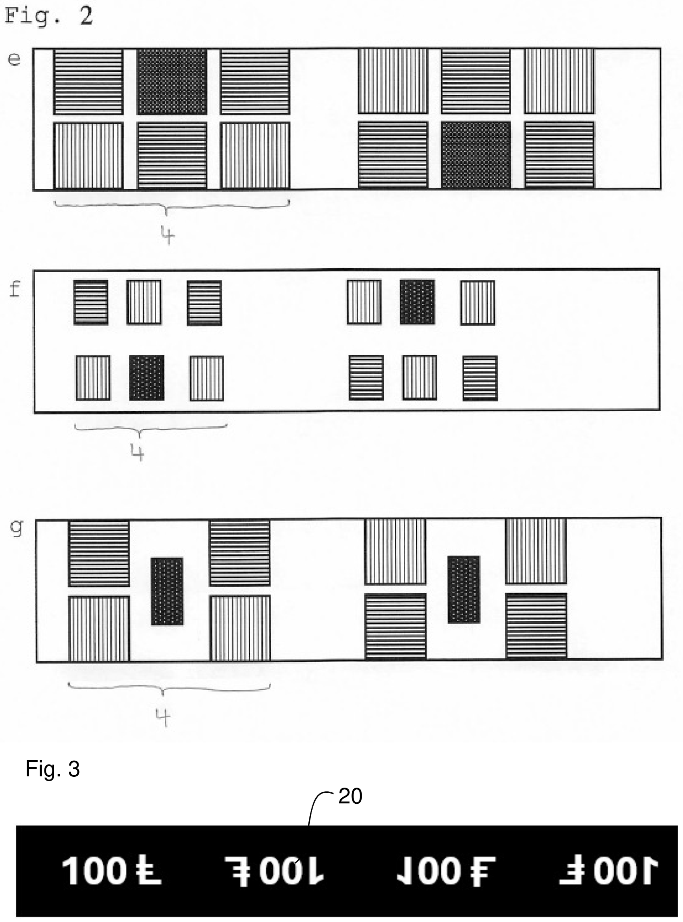

Fig. 1 and 2 each show security threads in different embodiments. Fig. 1a through 1f show a variety of first embodiment in which the security thread comprises a 1D magnetic code, whereas Fig. 2a through 2g show a variety of second embodiment in which the magnetic code is a 2D magnetic code. Apart from this difference, the basic aspects of the first and second embodiments are the same, which aspects relate to the fact that the security thread permits to be fed to a manufacturing machine in different orientations and/or feeding directions. A backside-frontside flipping of the security thread and/or a reverse feeding direction of the security thread can be allowed when embedding the security thread into a document of value or a precursor for such document of value. In preferred embodiments no rejects are produced for all four possible orientations (normal front-side orientation, backside-frontside flip, two feeding directions).

Fig. 1a will be explained first, because it shows best how the above-mentioned feature is obtained. Fig. 1a shows a top view of a security thread 2 comprising several individually located but in reading result identical magnetic codes 4 which each consist of a sequence of magnetic areas 6 which are either formed from first magnetic material 6a or a second magnetic material 6b. All figures symbolize the different magnetic materials by different hatching of the magnetic areas 6.

From left to right, each magnetic code 4 on the security thread 2 of Fig. 1a comprises a left magnetic area 6 made from the first magnetic material 6a, a center magnetic area made from the second magnetic material 6b and a right magnetic area made from the first magnetic material 6a. The sequence of magnetic areas 6 with interposed non-magnetic areas, namely between the left magnetic area and the centre magnetic area and between the centre magnetic area and the right magnetic area, constitute together with the different materials 6a, 6b some magnetic code 4 which is repeated along the magnetic thread 2, i.e. re-occurs along the longitudinal extension 8 along which the magnetic thread 2 extends. Of course, the magnetic code 4 repeats along the security thread 2. All figures only show a part of the security thread 2.

Different materials 6a, 6b vary coercitivity as magnetic parameter. That can be substituted or complemented by varying the thickness of magnetic material(s). This varies remanence as magnetic parameter. Overlapping of areas 6 is possible to vary coercitivity and/or remanence. Generally, the magnetic materials 6a, 6b and 6c have different magnetic properties through providing the layer forming the magnetic areas with varying material and/or thickness and/or geometry of the magnetic areas.

In Fig. 1a, the magnetic code 4 is constituted by the magnetic areas 6 in such structure that reading the magnetic code 4 is independent from the reading direction along the longitudinal extension. That means that the magnetic code gives the same result if read along the extension in a first direction or in a second direction, which is opposite to the first direction. In the Figs., the first direction may be left-to-right and the second direction right-to-left. In embodiments the sequence of magnetic areas of each magnetic code is symmetrical regarding inversion around a centre axis of the magnetic code extension.

This feature makes the security thread insensible to the feeding direction in which the thread is fed to the manufacturing machine. No detection of the magnetic code is necessary anymore in the machine. It does not matter whether the security thread 2 is fed to a manufacturing machine with left-hand end first or with right-hand end first, because the magnetic code 4 is identical, if read from left to right or from right to left. It is a reading direction invariance.

This feature may comprise that each magnetic code 4 is composed from the magnetic areas 6 such that the magnetic code 4 is symmetric to a centreline 14 running parallel to the transverse extension 10, which is perpendicular to the longitudinal extension 8. An inversion of the magnetic code 4 around the centreline 14 is symbolized by inversion arrow 18. This inversion does not change the magnetic code 4.

In Fig. 1a, the magnetic code 4 is also invariant against a rotation about the longitudinal axis 12 which is shown for the right-hand magnetic code 4 in Fig. 1b. This rotation is symbolized by a flipping arrow 16 and constitutes a backside-frontside inversion of the security thread 2. It can easily be seen that such inversion does not change any of the magnetic codes 4 on the security thread 2.

As a result, the security thread 2 can be fed even after flipping according to the arrow 16 into a manufacturing machine for embedding the security thread into a document of value or a precursor for such document of value. This equally has no impact on the magnetic code provided by the security thread in the document of value or the precursor. It is a flipping invariance.

Either or both of reading direction invariance and flipping invariance can be realized. In Figs. 1b-1f, 2a-2g there is reading direction invariance. In Figs. 1a-1e there is flipping invariance. In Figs. 2c-2g there is invariance only against a combination of flipping and reading inversion.

The figures show that the magnetic code can be constituted quite differently while still having the property that the magnetic codes 4 comprises at least one of the invariances.

Fig. 1b shows a larger magnetic code 4 having an extent along the longitudinal extension 8 which is far bigger than the extent of the magnetic code 4 of Fig. 1a just explained.

Fig. 1b shows that the size of the magnetic areas 6 does not need to be constant. Rather it is possible to use wider magnetic areas, as the left-hand and the right-hand magnetic areas 6 in the magnetic code 4 of Fig. 1b in combination with smaller magnetic areas 6 as for the center magnetic area in the magnetic code 4.

Fig. 1c further shows that it is not mandatory to have the magnetic codes extending over the full transversal extension of the security thread 2, although such property may be of advantage for making detection of the magnetic codes 4 easier.

Fig. 1d and 1e show that the number of magnetic areas can be modified as well as the width of the individual magnetic areas and their spacing.

Fig. 1f shows that the insensibility against the reading direction (left-to right or right-to-left) can be realized without symmetry around the longitudinal axis 8.

Fig. 2d through 2g relate to 2D magnetic codes in which the magnetic areas 6 are not only arranged along the longitudinal extension, as in the case of Fig. 1a through 1g but also arranged along the transversal extension 10. Apart from that, the same properties are obtained.

The inventive concept is of particular advantage in case the security thread has an unstructured face, in particular an unstructured front face and back face. This is particularly the case, if the front face and/or the back face is provided with a concealing layer which prevents that the magnetic areas can be seen in a transparent inspection.

The first embodiment of Fig. 1a through 1f is of advantage in case of rather narrow security threads, e.g. having a width between 1 and 1.5 mm, because the 1D magnetic code of the first embodiment makes detection with magnetic sensors easier. The second embodiment of Fig. 2a through 2g is of advantage for broader security threads, e.g. those having a width of 2 mm or more.

In Figs. 1a through 2g the security thread contains the magnetic areas 6 ("bits") from magnetic materials, e.g. magnetic pigments containing inks, wherein at least two different magnetic materials 6a-6c are used for the multiple bits, which differ in terms of their magnetic properties, e.g., coercivity (high/low), hard/soft, remanence, etc.

To vary coercivity, different blends of two magnetic materials (or corresponding magnetic pigment types) can also be used. Several blends can also be used having different ratios of the two individual magnetic materials.

A low coercive magnetic area conveniently comprises a coercive field strength of between approximately 10 and approximately 500 Oe (800 A/m to 40 kNm), preferably between approximately 150 and approximately 350 Oe (12 kA/m to 28 kA/m). The low coercive magnetic area is advantageously formed in a material containing iron oxides, pure iron, nickel, or another soft magnetic material. The thickness of the material layer is preferably between about 0.05 µm and about 20 µm. A highly coercive magnetic area advantageously has a coercive field strength above about 300 Oe (24 kA/m), preferably above about 1000 Oe (80 kA/m) and particularly preferably above about 2000 Oe (160 kA/m). Materials with a coercive field strength of up to about 4000 Oe (320 kA/m) are readily available commercially.

To vary remanence, different thicknesses of prints of the same material can be used. A bit can also consist of different magnetic inks printed on top of each other.

The thread 2 can be provided with additional functional layers, such as hot-melt adhesive for better anchoring in a banknote paper, single- or multi-coloured full-surface or partial single- or double-sided fluorescent prints.

Fig. 3 shows a magnetic code 4, embedded under a metallization which is partly metallized to form a Cleartext 20. The Cleartext 20 is visible when viewed from above, the magnetic code 4 is covered by the metallization. In this embodiment a symmetrical magnetic code 4 which is invariant is combined with a symmetrical and direction independent Cleartext 20.

### List of reference symbols

- 2: security thread
- 4: magnetic code
- 6: magnetic area
- 8: longitudinal extension
- 10: transverse extension
- 12: longitudinal axis
- 14: centre axis
- 16: inversion around the longitudinal axis
- 18: inversion around the centre axis
- 20: Cleartext

## Claims

1. A security thread to be embedded into a document of value, such as a banknote, a check, a credit card or the like, wherein
the security thread (2) extends along a longitudinal extension (8),
the security thread (2) comprises a multitude of identical magnetic codes (4) which are spaced apart in the longitudinal extension (8) and which are each provided by a sequence of magnetic areas (6),
wherein each sequence of the magnetic areas comprises at least two different magnetic materials (6a, 6b, 6c) and/or two different thicknesses of a magnetic material, and
wherein the magnetic areas (6) in each magnetic code (4) are arranged such that each magnetic code (4) is invariant for a reading direction along the longitudinal extension and/or wherein the magnetic areas (6) are arranged in each sequence symmetrically for flipping around the longitudinal extension (8).

2. The security thread according to claim 1, which further comprises at least one concealing layer covering the magnetic codes (4) and preventing visibility of the magnetic areas (6) in transparent view, wherein the security thread (2) comprises unstructured faces.

3. The security thread according to any of claim 1 or 2, wherein each magnetic code (4) is a 1D code in which each sequence the magnetic areas (6) which are different regarding their magnetic material are arranged along the longitudinal extension (8) only.

4. The security thread according to any of claim 1, 2 or 3, wherein each magnetic code (4) is a 2D code in which each sequence the magnetic areas (6) which are different regarding their magnetic material are arranged along the longitudinal extension (8) and the transversal extension (10).

5. A document of value, such as a banknote, a check, a credit card or the like, or a precursor for producing a document of value, such as a banknote paper, a check blank, a credit card blank or the like, wherein the document of value or the precursor comprises a security thread (2) according to any of claim 1 to 4.

6. A method for manufacturing a security thread to be embedded into a document of value, such as a banknote, a check, a credit card or the like, wherein
the security thread (2) is produced which extends along a longitudinal extension (8) and comprises a transverse extension (10) running transversely thereto,
the security thread (2) is provided with a multitude of identical magnetic codes which are spaced apart in the longitudinal extension (8) and which are each provided by a sequence of magnetic areas (6a, 6b, 6c),
wherein each sequence of the magnetic areas comprises at least two different magnetic materials (6a, 6b, 6c) and/or two different thicknesses of a magnetic material, and
wherein the magnetic areas (6) in each magnetic code (4) are arranged such that each magnetic code (4) is invariant for a reading direction along the longitudinal extension and/or wherein the magnetic areas (6) which are different regarding their magnetic material are arranged in each sequence symmetrically for flipping around the longitudinal extension (8).

7. The method according to claim 6, wherein at least one concealing layer is provided to cover the magnetic codes and prevent visibility of the magnetic areas (6) in transparent view, wherein the security thread (2) comprises unstructured faces.

8. The method according to any of claim 6 or 7, wherein each magnetic code is a 1D code in which each sequence the magnetic areas (6) which are different regarding their magnetic material are arranged along the longitudinal extension (8) only.

9. The method according to any of claim 6 to 8, wherein each magnetic code is a 2D code in which each sequence the magnetic areas (6) which are different regarding their magnetic material are arranged along the longitudinal extension (8) and the transversal extension (10).

10. A method for manufacturing a document of value, such as a banknote, a check, a credit card or the like or for manufacturing a precursor for producing a document of value, such as a banknote paper, a check blank, a credit card blank or the like, wherein a security (2) thread according to any of claims 1 to 6 is embedded into the document of value or the precursor.
